# EUROPÄISCHE PATENTSCHRIFT

(11) **EP 1 693 588 B1**
(45) Veröffentlichungstag und Bekanntmachung des Hinweises auf die Patenterteilung: **16.04.2014**
(21) Anmeldenummer: 06002621.8
(22) Anmeldetag: 09.02.2006
(51) Int. Cl.: F16D 13/68, F16B 21/18

(54) **Anordnung zur axialen Abstützung von zwei miteinander rotierenden Bauteilen**
Arrangement for axially supporting two rotating elements.
Arrangement pour le support axial de deux éléments rotatifs.

(30) Priorität: 18.02.2005 DE 102005007384
(43) Veröffentlichungstag der Anmeldung: 23.08.2006
(73) Patentinhaber: ZF Friedrichshafen AG, 88046 Friedrichshafen (DE)
(72) Erfinder: Kundermann, Wolfgang, 97422 Schweinfurt (DE); Müller, Ingo, 97421 Schweinfurt (DE)

(56) Entgegenhaltungen:
- EP-A2- 0 692 642
- WO-A-2004/065809
- DE-C1- 4 007 941
- DE-C1- 4 007 942
- FR-A- 2 302 443
- US-A- 2 595 787
- US-A- 2 960 359
- US-A- 4 459 119

## Beschreibung

Die Erfindung betrifft eine Anordnung zur Sicherung eines Sprengringes nach dem Oberbegriff des Patentanspruches 1 sowie ein Verfahren zur Anordnung eines Sprengringes nach Anspruch 6.

Sprengringe, welche zur Fixierung und/oder Abstützung von Lamellenpaketen und Lamellenkupplungseinrichtungen dienen, sind bekannt. Der Sprengring ist hierbei nicht geschlossen sondern weist einen radialen Spalt auf, wodurch er in seinem Innendurchmesser und Außendurchmesser durch elastische Verformung verändert werden kann. Der Sprengring wird zur Abstützung eines Lamellenpaketes in eine Ringnut eines Lamellenträgers eingesetzt. Hierzu wird im Falle der Anordnung der Ringnut am Innenumfang des Lamellenträgers der Sprengring in seinem Durchmesser radial verkleinert, so dass er axial in die Ebene der Ringnut eingebracht werden kann, um danach nach radial außen in seine Ursprungslage zurückzufedern wodurch er in der Ringnut axial fest angeordnet ist. Im Falle der Ringnut auf einer Außenumfangsfläche, wie z. B. auf einer Welle, wird der Sprengring in seinem Radius federnd aufgeweitet, über die Welle geschoben und dann in die Ringnut eingesetzt. Bei einer Anordnung des Sprengrings in einer Ringnut auf der Innenumfangsfläche eines Bauteils ist zwar der Sprengring gegen negative Fliehkrafteinflüsse nach radial außen gesichert, jedoch können sich bei einer ungünstigen Anregung des Gesamtsystems, infolge von Rotationsschwingungen, Schwingungen auf den Sprengring übertragen, wodurch dieser im ungünstigsten Fall aus seiner Nut heraus springen kann, wodurch das System nicht mehr betriebsbereit ist.

Es sind bereits Anordnungen zur axialen Abstützung von zwei miteinander rotierenden Bauteilen mittels eines Sprengringes bekannt, bei welchen der Sprengring radial gesichert ist (z. B. DE 103 02 075). Der Sprengring sitzt hier in einer Ringnut an der Innenumfangsfläche eines Lamellenträgers und dient zur axialen Abstützung eines weiteren Lamellenträgers. Zur Sicherung des Sprengringes ist hierbei am abzustützenden Lamellenträger, welcher drehfest mit dem ersten Lamellenträger verbunden ist, im Bereich der Stoßenden des Sprengringes jeweils eine sich axial erstreckende Rampe im Bereich des radialen Federweges der Stoßenden des Sprengringes angeordnet. Nachteilig hierbei ist, dass die Rampen axial unelastisch ausgebildet sind, so dass zum Montieren des Sprengringes dieser im Bereich seiner Stoßenden tordiert werden muss. Weiterhin muss der Sprengring in einer definierten Winkelstellung zum Lamellenträger eingebaut werden und darf sich bezüglich diesem während des Betriebs nicht verdrehen, wozu ein Noppen dient, welcher sich im eingebauten Zustand des Sprengringes zwischen dessen Stoßenden befindet, wodurch sich der Sprengring bezüglich des Lamellenträgers nicht mehr verdrehen kann.

Weiterhin sind Anordnungen zur Sicherung eines Sprengringes bekannt, wobei nach erfolgter Montage des Sprengringes in einer Ringnut am Innenumfang eines ringförmigen Bauteiles ein Sicherungselement zwischen die Stoßenden des Sprengringes passgenau gebogen wird, so dass dieser sich nicht mehr in seinem Umfang verkleinern kann. Nachteilig bei dieser Art der radialen Sicherung des Sprengringes ist, dass zusätzlich zum Montagevorgang ein weiterer Montageschritt vorgenommen werden muss, wobei sich der Sprengring relativ zum zusichernden Bauteil in einer definierten Winkelstellung befinden muss.

Aus der EP 0 692 643 A2 ist eine Anordnung zur axialen Abstützung von zwei miteinander rotierenden Bauteilen mittels eines Sprengringes bekannt, der in einer Ringnut des abstützenden Bauteiles eingesetzt ist, wobei zwischen dem abzustützenden Bauteil und dem Sprengring ein Sicherungselement angeordnet ist, welches mindestens ein axial elastisches Elemente aufweist, das den Sprengring radial sichert. Als abzustützendes Bauteil ist ein Wälzlager auf eine Welle offenbart.

Hiervon ausgehend ist es Aufgabe der Erfindung eine Anordnung zur axialen Abstützung von zwei miteinander rotierenden Bauteilen mittels eines Sprengringes zu schaffen, welche gegenüber dem Stand der Technik eine einfachere Montierbarkeit ermöglicht.

Diese Aufgabe wird durch die Merkmale des Patentanspruches 1 gelöst.

Der Sprengring ist dermaßen radial sichert, dass dieser seinen Durchmesser infolge von Fliehkrafteinwirkungen und/oder negativen Schwingungsanregungen nicht verändern kann. Vorteilhaft hierbei ist, dass durch das separate Bauteil des Sicherungselementes der Sprengring im Bereich seiner Stoßenden nicht extra torsionsfähig ausgestaltet sein muss. Ein weiterer Vorteil ist, dass das abzustützende Bauteil in seiner Geometrie frei wählbar ist und keine Elemente zur Sicherung des Sprengringes aufweisen muss, wodurch diese Art der Sprengririgsicherung universal für nahezu jedes beliebige abzustützende Bauteil anwendbar ist. Vorteilhaft hierbei ist, dass das Sicherungselement gegenüber dem Lamellenträger eine radial definierte Einbaulage erhält, wodurch das Sicherungselement gegenüber dem Sprengring zentriert wird.

Die elastischen Elemente können vorzugsweise rotationssymmetrisch am Umfang angeordnet sein. Vorteilhaft hierbei ist, dass dadurch der Sprengring in jeder beliebigen Einbaustellung gegenüber dem Sicherungselement radial gesichert ist, da auch bei ungünstiger Lage eines elastischen Elementes im Bereich eines der Stoßenden des Sprengringes dieser durch die übrigen elastischen Elemente ausreichend radial gesichert ist. Durch die Integrale Ausbildung der elastischen Elemente kann das Sicherungselement kostengünstig und bauraumoptimiert hergestellt werden.

Es wird ein radiales Aufweiten bzw. verengen des Sprengringes sicher verhindert, da die der Ringnut gegenüberliegende Umfangsfläche des Sprengringes radial gesichert ist. Dadurch sind beide Umfangsflächen des Sprengringes radial gesichert, die eine Umfangsfläche durch die Sprengringnut und die gegenüberliegende Umfangsfläche durch die elastischen Elemente. Bei einer Durchmesserveränderung des Sprengringes aufgrund von Schwingungsanregungen kommt die den elastischen Elementen zugeordnete Umfangsfläche an den elastischen Elementen zur Anlage, wodurch eine weitere Durchmesseränderung verhindert wird. Die elastischen Elemente sind hierbei vorteilhafterweise lediglich axial elastisch ausgeführt und radial unelastisch ausgeführt.

Eine erfindungsgemäße Ausgestaltung des abzustützenden Bauteils sieht weiterhin vor, dass der Sprengring zur axialen Abstützung einer Endlamelle eines Lamellenpaketes dient, und dass das Sicherungselement zwischen der Endlamelle und dem Sprengring angeordnet ist. Vorteilhaft hierbei ist, dass zusätzlich zur radial definierten Einbaulage des Sicherungselementes dieses eine axial genau definierte Einbaulage erhält. Dies wird dadurch gewährleistet, dass im Betrieb der Lamellenkupplungseinrichtung das Sicherungselement sowohl an der Endlamelle; als auch am Sprengring ohne sonderliches Axialspiel dicht anliegt.

Eine bevorzugte Ausführungsform sieht vor, dass der Sprengring am Innenumfang des Lamellenträgers angeordnet ist, und dass die elastischen Elemente einen Außenumfangsbereich aufweisen, welcher am Innenumfang des Sprengringes wirkt.

Eine weitere Ausführungsform sieht vor, dass der Sprengring am Außenumfang des Lamellenträgers angeordnet ist, und dass die elastischen Elemente einen Innenumfangsbereich aufweisen, welcher am Außenumfang des Sprengringes wirkt.

Erfindungsgemäß ist weiterhin vorgesehen, dass der Sprengring als Ausgleichselement dient, um axiale Toleranzen des Lamellenpaktes auszugleichen. Vorteilhaft hierbei ist, dass das Sicherungselement zusätzlich zur Radialsicherung des Sprengringes eine weitere Funktion erfüllt. Zur sicheren und definierten Funktionsfähigkeit einer Lamellenkupplungseinrichtung muss ein Lamellenpaket eine definierte axiale Dicke aufweisen, so dass ein auf das Lamellenpaket wirkender Kolben in jeder Verschiebestellung eine definierte Drehmomentübertragungskapazität der Kupplungseinrichtung herstellt, bzw. das jedem Druckzustand des Kolbens eine vorbestimmte Drehmomentübertragungskapazität entspricht. Durch das Aufsummieren der Toleranzen der einzelnen Innenlamellen und Außenlamellen ergibt sich bei verschiedenen Lamellenpaketen jeweils eine andere axiale Dicke des Lamellenpaketes. Um eine definierte axiale Erstreckung des Lamellenpaketes herzustellen, ist erfindungsgemäß vorgesehen, dass verschieden axial starke Sicherungselemente eingebaut werden können. Zur Auswahl des richtigen Sicherungselementes, welches die Axialtoleranzen des Lamellenpaketes ausgleicht, wird hierzu vor dem Einbau des Sicherungselementes der axiale Abstand der Endlamelle zur Ringnut dem Außenlamellenträger vermessen und das entsprechende Sicherungselement ausgewählt.

Die Erfindung betrifft weiterhin ein Verfahren zur Anordnung eines Sprengringes zur axialen Abstützung eines Lamellenpakets nach Anspruch 6. Vorteilhaft hierbei ist, dass lediglich die elastischen Elemente axial eingefedert werden, ohne dass das komplette Lamellenpaket sich axial verschiebt. Ein weiterer Vorteil besteht darin, dass der Sprengring sowohl an der Außenumfangsfläche wie auch an der Innenumfangsfläche nach dem Einrasten in die Ringnut radial gesichert ist.

Ein weiterer wesentlicher Vorteil dieses Verfahrens besteht darin, dass weder das Sicherungselement in einer definierten Winkellage zum Lamellenträger angeordnet werden muss, noch dass der Sprengring in einer definierten Winkellage zum Sicherungselement eingesetzt werden muss. Dies vereinfacht den Montagevorgang wesentlich. Der Sprengring muss zur Montage lediglich in seinem Durchmesser gegen seine Federkraft verändert werden, um in die Ebene der Ringnut geschoben werden zu können um dann federnd einzurasten.

Eine vorteilhafte Ausgestaltung der Erfindung sieht hierbei vor, dass der Sprengring in einer Ringnut am Innenumfang des Lamellenträgers angeordnet ist, und dass die elastischen Elemente schräg nach radial außen stehen und nach erfolgter Montage sich radial innerhalb des Sprengringes befinden.

Eine weitere alternative Ausgestaltung der Erfindung sieht vor, dass der Sprengring in einer Ringnut am Außenumfang des Lamellenträgers angeordnet ist, und dass die elastischen Elemente schräg nach radial innen stehen und nach erfolgter Montage sich radial außerhalb des Sprengringes befinden.

Ein Ausführungsbeispiel ist in den Zeichnungen dargestellt und wird im folgenden näher beschrieben. Es zeigen:
- Figur 1:: Eine erfindungsgemäße Radialsicherung eines Sprengringes in einer Lamellenkupplungseinrichtung.
- Figur 2:: Das erfindungsgemäße Sicherungselement in einer Draufsicht.
- Figur 3:: Drei verschiedene Ausschnitte von Schnittebenen durch das Sicherungselement mit alternativen Ausführungsformen der elastischen Elemente.
- Figur 4:: eine alternative Ausgestaltung eines erfindungsgemäßen Sicherungselementes in einer Draufsicht.

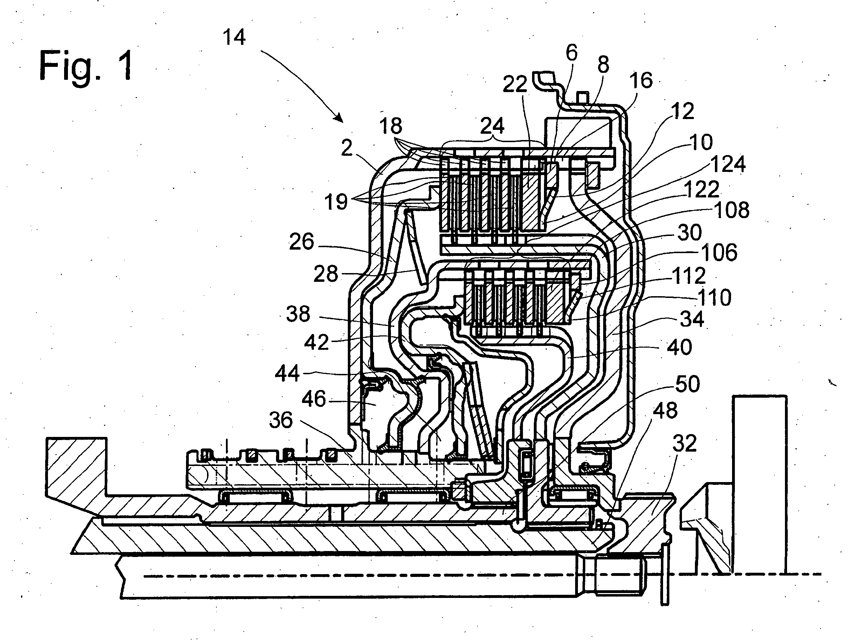

In Fig. 1 ist eine Lamellenkupplungseinrichtung 14 dargestellt, welche aus zwei coaxial angeordneten radial gestaffelten Lamellenkupplungen besteht. Hierbei ist die äußere Lamellenkupplung der inneren Getriebeeingangswelle 48 zugeordnet und die innere Lamellenkupplung der äußeren, als Hohlwelle ausgebildeten, Getriebeeingangswelle 50. Zur Drehmomentübertragung des Drehmoments, welches von einer Antriebseinheit erzeugt wird, auf eine der beiden Getriebewellen, wird die zugehörige Kupplung mittels eines Betätigungskolbens 26, 42 geschlossen. Das Drehmoment wird über die Eingangsnabe 32 auf den Mitnehmer 34 übertragen, von wo aus es in seinem radial äußeren Bereich in den Lamellenträger 2 eingeleitet wird. Im Falle der Betätigung der äußeren Lamellenkupplung mittels des Betätigungskolbens 26 wird hierzu der Druckraum 46 mit Drucköl befüllt, wodurch sich der Kolben 26 nach rechts bewegt und somit das Lamellenpaket 24, welches aus den Außenlamellen 18 und Innenlamellen 19 besteht, kraftschlüssig schließt. Hierdurch wird das Drehmoment vom Lamellenträger 2 über das Lamellenpaket auf den inneren Lamellenträger 30 übertragen, von wo aus es nach radial innen über eine Nabe bzw. deren Innenverzahnung auf die-innere Getriebeeingangswelle 48 übertragen wird. Im Falle der Drehmomentübertragung über die radial innere Kupplungseinrichtung wird das Drehmoment über den Lamellenträger 2 weiter nach radial innen auf die Ölzuführnabe 36 übertragen und von dort aus auf den Außenlamellenträger 38, welcher mit der Ölzuführnabe drehfest verbunden ist. Zur Drehmomentübertragung wird jetzt der Betätigungskolben 42 geschlossen in dem der zugehörige Druckraum 44 mit Drucköl befüllt wird. Hierdurch wird wiederum das Lamellenpaket der inneren Kupplungseinrichtung geschlossen, wodurch das Drehmoment vom Außenlamellenträger 38 auf den Innenlamellenträger 40 der inneren Kupplungseinrichtung übertragen wird und von dort aus nach radial innen über eine Verzahnung auf die äußere Getriebeeingangswelle 50. Die beiden Lamellenpakete 24, 124 werden bei Betätigung der beiden Betätigungskolben 26, 42 jeweils am äußeren Lamellenträger 2, 38 axial abgestützt. Hierzu ist jeweils ein Sprengring 6, 106 in einer Ringnut 8, 108 angeordnet. Die beiden Endlamellen 22, 122 sind axial dicker ausgestaltet als die jeweiligen anderen Außenlamellen, um eine genügend axiale Steifigkeit aufzuweisen. Um einen Kraftschluss zur Drehmomentübertragung zu erlangen, wird jeweils die Endlamelle über den Sprengring 6, 106 axial abgestützt. Zwischen der Endlamelle 22 der äußeren Lamellenkupplung und dem Sprengring 6 ist das Sicherungselement 10 angeordnet, welches an seinem Außenumfang ein Verzahnungsprofil aufweist, womit es im Innenverzahnungsprofil des Außenlamellenträgers 2 drehfest aufgenommen ist. Die axiale Dicke des Sicherungselementes 10 ist hier vergleichsweise dünn gegenüber der Endlamelle 22. Das Sicherungselement 10 weist elastische Elemente 12 auf, welche als federnde Zungen ausgebildet sind und axial aus der Ebene des Sicherungselementes herausstehen und zwar genau soweit, dass ein radial äußerer Bereich der elastischen Elemente in etwa mittig der Ebene des Sprengringes angeordnet ist. Der Sprengring 6 liegt mit seinem Außenumfang passgenau in der Ringnut 8 des Außenlamellenträgers 2 an. Hierbei sitzt der Sprengring nicht lose in der Ringnut, sondern ist, durch seine Federvorspannung, vorgespannt eingebaut. Am Innenumfang des Sprengringes 6 sind in unmittelbarer Nähe die elastischen Elemente 12 angeordnet. Bei eventuellen Torsionsschwingungen, welche von der Antriebseinheit auf den Außenlamellenträger 2 übertragen werden, kann der Sprengring 6 im ungünstigsten Fall in Resonanz geraten, zu schwingen anfangen und ohne eine Radialsicherung nach radial innen aus seiner Ringnut heraustreten. Durch die Anordnung der elastischen Elemente 12, direkt radial innerhalb des Sprengringes 6, stößt dieser bei Radialschwingungen gegen den Außenumfang der elastischen Elemente und kann sich somit radial nicht genügend verkleinern, um die Ringnut 8 verlassen zu können.

Eine weitere erfindungsgemäße Funktion des Sicherungselementes 10 besteht darin, dass dieses jeweils speziell für eine Kupplung ausgewählt wird und damit eine Axialtoleranz des Lamellenpaketes ausgleicht. Das Lamellenpaket, welches aus den abwechselnd angeordneten Innen- und Außenlamellen 18, 19 besteht weist bei verschiedenen Kupplungen aufgrund der Einzeltoleranzen der Lamellen, welche sich jeweils aufsummieren, unterschiedliche axiale Dicken auf. Da die Stellung des Betätigungskolbens 26 durch den Außenlamellenträger 2 in der einen Richtung fixiert ist und in der anderen Richtung, in Richtung Lamellenpaket, durch die Rückstellfeder 28 eine genaue Kraftkennlinie aufweist, ist es erforderlich, dass die Lamellenkupplung bei einer bestimmten Position des Betätigungskolbens eine genau definierte Drehmomentübertragungskapazität besitzt. Hierzu ist aber eine Axialerstreckung des Lamellenpaketes vonnöten, welche in einem engen Toleranzband liegt. Um dies zu gewährleisten, werden erfindungsgemäß verschiedene Sicherungselemente verwendet, welche unterschiedliche axiale Dicken aufweisen, um die axiale Erstreckung des Lamellenpaketes plus Sicherungselement auf eine genau definierte axiale Breite zu bringen. Zur Auswahl des richtigen Sicherungselementes wird hierbei vor Einbau des Sicherungselementes und des Sprengringes der Abstand der Endlamelle von der Ringnut aus gemessen und ein entsprechendes Sicherungselement mit entsprechender Dicke ausgewählt. Nach dem Einbau des Sicherungselementes wird der Sprengring in seinem Durchmesser verkleinert, so dass er kleiner als der Innenumfang des Lamellenträgers 2, bzw. dessen Verzahnungsprofils 20 ist. Der Sprengring 6 weist hierzu am Umfang eine Öffnung auf, wodurch die beiden Stoßenden, welche sich dadurch ergeben, zusammengezogen werden können, wodurch sich der Durchmesser des Sprengringes verkleinert. Da der Sprengring im gespannten Zustand jetzt in einem Durchmesserbereich liegt, welcher sich mit dem Außendurchmesser der elastischen Elemente überschneidet, ist es nötig, beim Einbau des Sprengringes in die Ringnut die elastischen Elemente axial wegzudrücken, um in die Ebene der Ringnut zu gelangen und dann den Sprengring dort einzusetzen. Beim Einfedern des Sprengrings in seine Ringnut gibt er die federnden Zungen des Sicherungselementes axial frei, wodurch sich diese wieder axial zurück in ihre Ausgangsstellung bewegen, wodurch sie nunmehr radial innerhalb des Sprengringes angeordnet sind.

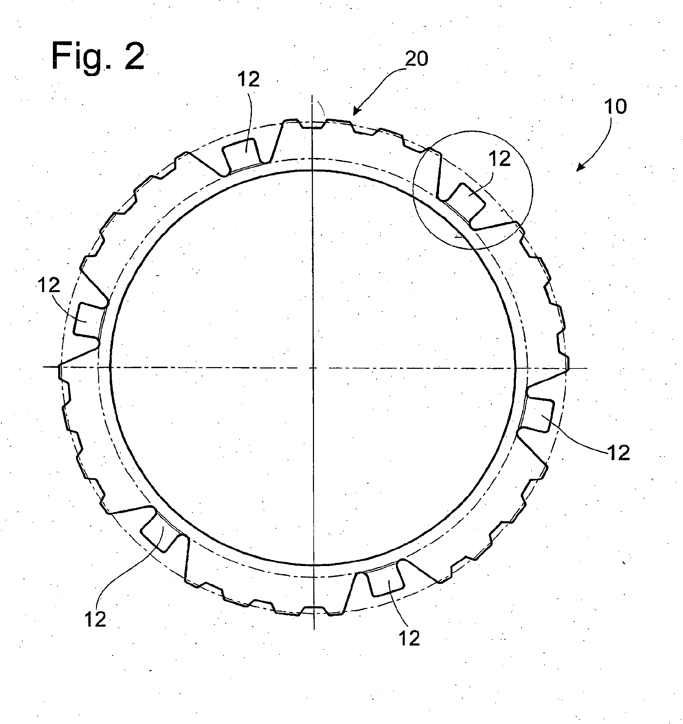

Fig. 2 zeigt ein erfindungsgemäßes Sicherungselement 10, welches an seinem Außenumfang Bereiche mit einem Verzahnungsprofil 20 und, abwechselnd dazu angeordnet, Bereiche mit elastischen Elementen 12 aufweist. Im Bereich der elastischen Elemente 12 ist das Sicherungselement von radial außen her weitgehend ausgestanzt, so dass lediglich am Innenumfang des Sicherungselementes ein relativ geringer Bereich bestehen bleibt, welcher umlaufend geschlossen ist. Hierdurch ergibt sich zum Einsetzen des Sprengringes eine optimale Übersetzung an den Federzungen, welche beim Einsetzen zurückgedrückt werden müssen.

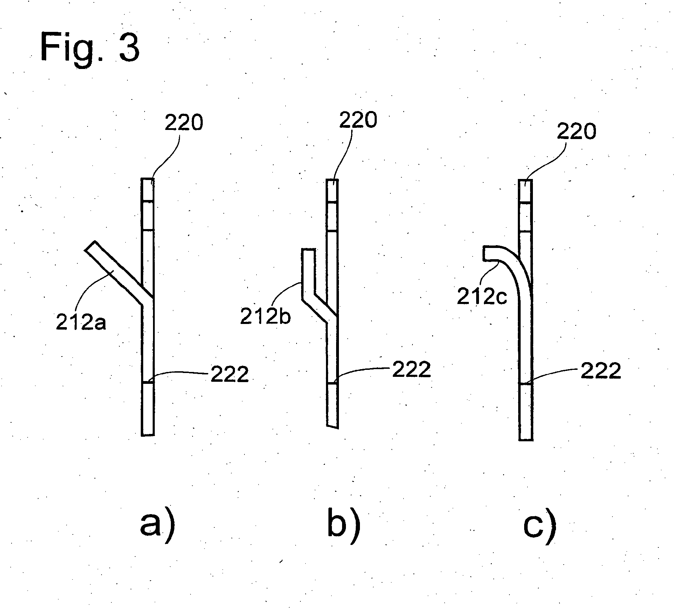

In Fig. 3 sind alternative Ausgestaltungen der elastischen Elemente dargestellt. Das elastische Element in Abbildung a, welches mit Bezifferungsnummer 212 a versehen ist, entspricht in etwa dem elastischen Element 12 aus Fig. 1. Mit Bezugsziffern 220 und 222 sind in allen drei Abbildungen das Verzahnungsprofil am Außenumfang 220 und der Innenumfang 222 des Sicherungselementes bezeichnet. In Abbildung b weist das elastische Element 212 b einen weiteren Knick auf, so dass sich das elastische Element im wesentlichen parallel, aber axial versetzt zur Ebene des Sicherungselementes erstreckt. In Abbildung c ist das elastische Element 212 c auf einer Bogenform aus der Ebene des Sicherungselementes herausgebogen.

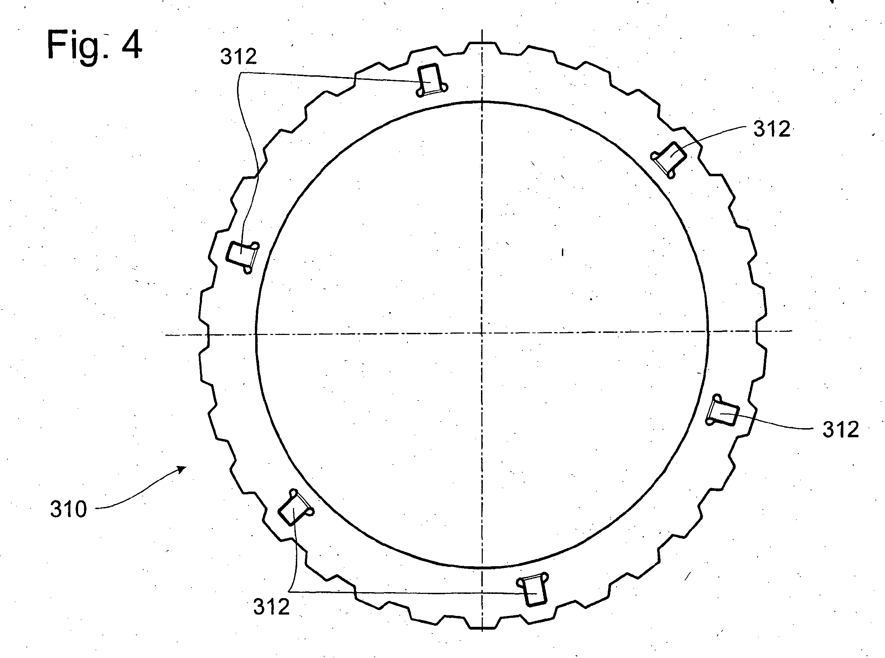

Fig. 4 zeigt ein weiteres erfindungsgemäßes Sicherungselement 310, welches wie das Sicherungselement in Fig. 2 an seinem Außenumfang ein Verzahnungsprofil zur drehfesten Aufnahme des Sicherungselementes in einem Außenlamellenträger aufweist. Im Gegensatz zur Ausgestaltung des Sicherungselement 10 der Fig. 2 sind die elastischen Elemente 312 nicht am Außenumfang des Sicherungselement 310 angeordnet, sondern in einem Mittenbereich, sodass sowohl am Innenumfang wie auch am Außenumfang des Sicherungselementes ein Umfangsbereich bestehen bleibt, welcher umlaufend geschlossen ist. Hierdurch wird gewährleistet, dass sich das Lamellenpaket am Außenumfang geschlossen am Sprengring abstützen kann, womit lokale Unterschiede der wirkenden Anpresskräfte am Außenumfang des Lamellenpaketes verhindert werden. Die einzelnen elastischen Elemente 312 sind erfindungsgemäß ausgestanzt und weisen seitlich an ihrem inneren radialen Übergangsbereich zum Sicherungselement 310 komplett ausgestanzte gerundete Übergangsbereiche auf, welche Spannnungsspitzen beim Einfedern der elastischen Elemente 312 mindern sollen und ein Einreißen des Sicherungselementes 310 verhindern sollen.
- 2.: abstützendes Bauteil; Lamellenträger
- 4.: abstützendes Bauteil
- 6.: Sprengring
- 8.: Ringnut
- 10:: Sicherungselement
- 12.: elastische Elemente
- 14.: Lamellenkupplungseinrichtung
- 16.: Verzahnungsprofil
- 18.: Lamellen
- 19.: Innenlamellen
- 20.: Verzahnungsprofil
- 22.: Endlamelle
- 24.: Lamellenpaket
- 26.: Betätigungskolben
- 28.: Rückstellfeder
- 30-: Innenlamellenträger
- 32.: Eingangsnabe
- 34.: Mitnehmer
- 36.: Ölzuführnabe
- 38.: Außenlamellenträger
- 40.: Innenlamellenträger
- 42.: Betätigungskolben
- 44.: Druckraum
- 46.: Druckraum
- 48.: Getriebeeingangswelle
- 50.: Getriebeeingangswelle
- 106.: Sprengring
- 108.: Ringnut
- 110.: Sicherungselement
- 112: elastische Elemente
- 212a: elastische Elemente
- 212b: elastische Elemente
- 212c: elastische Elemente
- 220: Verzahnungsprofil
- 222: Innenumfang

## Patentansprüche

1. Anordnung zur axialen Abstützung von zwei miteinander rotierenden Bauteilen (2, 4) mittels eines Sprengringes (6), der in einer Ringnut (8) des abstützenden Bauteiles (2) eingesetzt ist, wobei zwischen dem abzustützenden Bauteil (2) und dem Sprengring (6) ein Sicherungselement (10) angeordnet ist, welches mindestens ein axial elastisches Elemente (12) aufweist, das den Sprengring (6) radial sichert dadurch gegenzeichnet, dass das abstützende Bauteil (2) ein Lamellenträger einer Lamellenkupplungseinrichtung (14) im Antriebstrang eines Kraftfahrzeugs ist, welcher an einer Umfangsfläche ein Verzahnungsprofil (16) zur drehfesten Aufnahme von Lamellen (18) aufweist, und dass das Sicherungselement (10) mittels eines korrespondierenden Verzahnungsprofils (20) drehfest gegenüber dem Lamellenträger (2) angeordnet ist, wobei das Sicherungselement (10) als ringförmige Stahllamelle ausgebildet ist und aus Federstahl besteht, wobei mindestens drei elastische Elemente (12) am Umfang des Sicherungselementes rotationssymmetrisch angeordnet sind und integral mit diesem ausgebildet sind und die elastischen Elemente (12) axial aus der Lamellenebene in Richtung Sprengring (6) soweit hervorstehen, dass ein Wirkungsbereich der elastischen Elemente in der Einbauebene des Sprengringes angeordnet ist.

2. Anordnung nach Anspruch 1,
**dadurch gekennzeichnet,**
**dass** der Sprengring (6) zur axialen Abstützung einer Endlamelle (22) eines Lamellenpaketes (24) dient, und dass das Sicherungselement (10) zwischen der Endlamelle (22) und dem Sprengring (6) angeordnet ist.

3. Anordnung nach Anspruch 1,
**dadurch gekennzeichnet,**
**dass** der Sprengring (6) am Innenumfang des Lamellenträgers (2) angeordnet ist, und dass die elastischen Elemente einen Außenumfangsbereich (26) aufweisen, welcher am Innenumfang des Sprengringes (6) wirkt.

4. Anordnung nach Anspruch 1,
**dadurch gekennzeichnet,**
**dass** der Sprengring (6) am Außenumfang des Lamellenträgers (2) angeordnet ist, und dass die elastischen Elemente einen Innenumfangsbereich aufweisen, welcher am Außenumfang des Sprengringes (6) wirkt.

5. Anordnung nach Anspruch 2,
**dadurch gekennzeichnet,**
**dass** der Sprengring (6) als Ausgleichselement dient, um axiale Toleranzen des Lamellenpaktes (24) auszugleichen.

6. Verfahren zur Anordnung eines Sprengringes (6) zur axialen Abstützung eines Lamellenpaketes (24) einer Lamellenkupplungseinrichtung (14) im Antriebstrang eines Kraftfahrzeugs, wobei der Sprengring (6) in einer Ringnut (8) eines Lamellenträgers (2) eingesetzt ist
**dadurch gekennzeichnet,**
**dass** zwischen der Endlamelle (22) und dem Sprengring (6) das Sicherungselement (10) angeordnet ist, das als ringförmige Stahllamelle ausgebildet ist, die aus Federstahl besteht, wobei mindestens drei elastische Elemente (12) am Umfang des Sicherungselementes rotationssymmetrisch angeordnet sind und integral mit diesem ausgebildet, wobei die elastischen Elemente (12) axial aus der Lamellenebene in Richtung Sprengring (6) soweit hervorstehen, dass ein Wirkungsbereich der elastischen Elemente in der Einbauebene des Sprengringes angeordnet ist, und dass zur Montage des Sprengringes (6) dessen Durchmesser soweit geändert wird, dass er sich mit einem Durchmesserbereich der elastischen Elemente (12) überdeckt, wodurch beim axialen Verschieben des Sprengringes (6) in die Ebene der Ringnut (8) die elastischen Elemente (12) axial federnd aus der Ebene des Sprengringes (6) weggedrückt werden und beim anschließenden Einsetzen des Sprengringes (6) in die Ringnut (8) die elastischen Elemente (12) axial in die Ebene des Sprengringes (6) zurückfedern.

7. Verfahren nach Anspruch 6,
**dadurch gekennzeichnet,**
**dass** der Sprengring (6) in einer Ringnut (8) am Innenumfang des Lamellenträgers (2) angeordnet ist, und dass die elastischen Elemente (12) schräg nach radial außen stehen und nach erfolgter Montage sich radial innerhalb des Sprengringes (6) befinden.

8. Verfahren nach Anspruch 6,
**dadurch gekennzeichnet,**
**dass** der Sprengring (6) in einer Ringnut (8) am Außenumfang des Lamellenträgers (2) angeordnet ist, und dass die elastischen Elemente (12) schräg nach radial innen stehen und bei erfolgter Montage sich radial außerhalb des Sprengringes (6) befinden.

## Claims

1. Arrangement for axially supporting two mutually rotating components (2, 4) by means of a spring ring (6) which is inserted in an annular groove (8) of the supporting component (2), there being arranged between the supporting component (2) and the spring ring (6) a securing element (10) which has at least one axially elastic element (12) which secures the spring ring (6) radially, **characterized in that** the supporting component (2) is a disc carrier of a multiple-disc clutch device (14) in the drive train of a motor vehicle, which disc carrier has on a circumferential surface a toothing profile (16) for the rotationally fixed reception of discs (18), and **in that** the securing element (10) is arranged in a rotationally fixed manner with respect to the disc carrier (2) by means of a matching toothing profile (20), the securing element (10) being designed as a ring-shaped steel lamella and consisting of spring steel, at least three elastic elements (12) being arranged in a rotationally symmetrical manner on the circumference of the securing element and being formed integrally with the latter, and the elastic elements (12) projecting axially out of the disc plane in the direction of the spring ring (6) to an extent such that an active region of the elastic elements is arranged in the installation plane of the spring ring.

2. Arrangement according to Claim 1, **characterized in that** the spring ring (6) serves for axially supporting an end disc (22) of a disc stack (24), and **in that** the securing element (10) is arranged between the end disc (22) and the spring ring (6).

3. Arrangement according to Claim 1, **characterized in that** the spring ring (6) is arranged on the inner circumference of the disc carrier (2), and **in that** the elastic elements have an outer circumferential region (26) which acts on the inner circumference of the spring ring (6).

4. Arrangement according to Claim 1, **characterized in that** the spring ring (6) is arranged on the outer circumference of the disc carrier (2), and **in that** the elastic elements have an inner circumferential region which acts on the outer circumference of the spring ring (6).

5. Arrangement according to Claim 2, **characterized in that** the spring ring (6) serves as a compensating element in order to compensate axial tolerances of the disc stack (24).

6. Method for arranging a spring ring (6) for axially supporting a disc stack (24) of a multiple-disc clutch device (14) in the drive train of a motor vehicle, the spring ring (6) being inserted in an annular groove (8) of a disc carrier (2), **characterized in that** the securing element (10), which is designed as a ring-shaped seal lamella consisting of spring steel, is arranged between the end disc (22) and the spring ring (6), at least three elastic elements (12) being arranged in a rotationally symmetrical manner on the circumference of the securing element and being formed integrally with the latter, the elastic elements (12) projecting axially out of the disc plane in the direction of the spring ring (6) to an extent such that an active region of the elastic elements is arranged in the installation plane of the spring ring, and **in that**, to mount the spring ring (6), its diameter is changed to an extent such that it overlaps with a diametral region of the elastic element (12), as a result of which, when the spring ring (6) is displaced axially into the plane of the annular groove (8), the elastic elements (12) are pressed away from the plane of the spring ring (6) in an axially resilient manner and, when the spring ring (6) is subsequently inserted into the annular groove (8), the elastic elements (12) spring back axially into the plane of the spring ring (6).

7. Method according to Claim 6, **characterized in that** the spring ring (6) is arranged in an annular groove (8) on the inner circumference of the disc carrier (2), and **in that** the elastic elements (12) slant radially outwards and, after mounting has taken place, are located radially within the spring ring (6).

8. Method according to Claim 6, **characterized in that** the spring ring (6) is arranged in an annular groove (8) on the outer circumference of the disc carrier (2), and **in that** the elastic elements (12) are slanted radially inwards and, when mounting has taken place, are located radially outside the spring ring (6).

## Revendications

1. Agencement pour le support axial de deux éléments (2, 4) tournant l'un avec l'autre au moyen d'un jonc (6) qui est inséré dans une rainure annulaire (8) de l'élément de support (2), un élément de fixation (10) étant disposé entre l'élément de support (2) et le jonc (6), lequel élément de fixation comprend au moins un élément axialement élastique (12) qui fixe radialement le jonc (6), **caractérisé en ce que** l'élément de support (2) est un support de disques d'un dispositif d'embrayage à disques (14) dans la chaîne cinématique d'un véhicule automobile, lequel support de disques présente sur une surface périphérique un profil de denture (16) pour recevoir de manière solidaire en rotation des disques (18), et **en ce que** l'élément de fixation (10) est disposé de manière solidaire en rotation par rapport au support de disques (2) au moyen d'un profil de denture correspondant (20), l'élément de fixation (10) étant réalisé sous forme de disque annulaire en acier et étant constitué d'acier à ressorts, au moins trois éléments élastiques (12) étant disposés suivant une symétrie de révolution sur la périphérie de l'élément de fixation et étant réalisés d'un seul tenant avec celui-ci et les éléments élastiques (12) faisant saillie axialement hors du plan du disque dans la direction du jonc (6) jusqu'à ce qu'une région d'action des éléments élastiques soit disposée dans le plan d'installation du jonc.

2. Agencement selon la revendication 1,
**caractérisé en ce que**
le jonc (6) sert au support axial d'un disque d'extrémité (22) d'un paquet de disques (24) et **en ce que** l'élément de fixation (10) est disposé entre le disque d'extrémité (22) et le jonc (6).

3. Agencement selon la revendication 1,
**caractérisé en ce que**
le jonc (6) est disposé sur la périphérie intérieure du support de disques (2) et **en ce que** les éléments élastiques comprennent une région périphérique extérieure (26) qui agit sur la périphérie intérieure du jonc (6).

4. Agencement selon la revendication 1,
**caractérisé en ce que**
le jonc (6) est disposé sur la périphérie extérieure du support de disques (2) et **en ce que** les éléments élastiques comprennent une région périphérique intérieure qui agit sur la périphérie extérieure du jonc (6).

5. Agencement selon la revendication 2,
**caractérisé en ce que**
le jonc (6) sert d'élément de compensation pour compenser des tolérances axiales du paquet de disques (24).

6. Procédé d'agencement d'un jonc (6) pour le support axial d'un paquet de disques (24) d'un dispositif d'embrayage à disques (14) dans la chaîne cinématique d'un véhicule automobile, le jonc (6) étant inséré dans une rainure annulaire (8) d'un support de disques (2),
**caractérisé en ce que**
l'élément de fixation (10) est disposé entre le disque d'extrémité (22) et le jonc (6), lequel élément de fixation est réalisé sous forme de disque annulaire en acier qui est constitué d'acier à ressorts, au moins trois éléments élastiques (12) étant disposés suivant une symétrie de révolution sur la périphérie de l'élément de fixation et étant réalisés d'un seul tenant avec celui-ci, les éléments élastiques (12) faisant saillie axialement hors du plan du disque dans la direction du jonc (6) jusqu'à ce qu'une région d'action des éléments élastiques soit disposée dans le plan d'installation du jonc, et **en ce que**, pour le montage du jonc (6), son diamètre est modifié jusqu'à ce qu'il recouvre une région diamétrale des éléments élastiques (12), de telle sorte que, lors du déplacement axial du jonc (6) dans le plan de la rainure annulaire (8), les éléments élastiques (12) soient repoussés axialement de manière élastique hors du plan du jonc (6) et que, lors de l'insertion subséquente du jonc (6) dans la rainure annulaire (8), les éléments élastiques (12) reviennent élastiquement axialement dans le plan du jonc (6).

7. Procédé selon la revendication 6,
**caractérisé en ce que**
le jonc (6) est disposé dans une rainure annulaire (8) sur la périphérie intérieure du support de disques (2) et **en ce que** les éléments élastiques (12) sont inclinés radialement vers l'extérieur et se trouvent radialement à l'intérieur du jonc (6) une fois le montage effectué.

8. Procédé selon la revendication 6,
**caractérisé en ce que**
le jonc (6) est disposé dans une rainure annulaire (8) sur la périphérie extérieure du support de disques (2) et **en ce que** les éléments élastiques (12) sont inclinés radialement vers l'intérieur et se trouvent radialement à l'extérieur du jonc (6) une fois le montage effectué.
